# EUROPEAN PATENT SPECIFICATION

(11) **EP 1 093 431 B1**
(45) Date of publication and mention of the grant of the patent: **28.05.2003**
(21) Application number: 99928138.9
(22) Date of filing: 30.06.1999
(51) Int. Cl.: B62M 3/08, B62M 3/12

(54) **SAFETY PEDAL FOR A CYCLE**
SICHERHEITSPEDAL FÜR FAHRRAD
PEDALE DE SECURITE POUR BICYCLETTE

(30) Priority: 03.07.1998 GB 9814337
(43) Date of publication of application: 25.04.2001
(73) Proprietor: Sumner, Steven Robert, Ashford, Middlesex TW15 1LS (GB); Keena, Trevor Bernard, Ashford, Middlesex TW15 1LS (GB)
(72) Inventor: Sumner, Steven Robert, Ashford, Middlesex TW15 1LS (GB); Keena, Trevor Bernard, Ashford, Middlesex TW15 1LS (GB)
(74) Representative: Atkinson, Ralph
(86) International application number: GB9902057
(87) International publication number: WO00001574

(56) References cited:
- US-A- 3 764 976
- US-A- 5 662 405
- US-A- 5 702 172
- US-A- 5 902 038

## Description

The invention relates to a safety pedal for a cycle. In particular the invention relates to a pedal for a bicycle including means for emitting red light only to the rear of the cycle for safety purposes.

It is well known to provide pedals with reflectors, particularly amber or red reflectors, to provide rearward reflected illumination for example when lit by light from a vehicle headlamp directed onto the pedal.

Passive reflectors rely on light from a vehicle approaching the cycle from the rear. However, the forward pattern of a car headlight beam, particularly with dipped headlights, may not illuminate the pedals of a cyclist until the car is within 40 metres or less from the cyclist.

It is also known to provide lateral illumination from the side of the cycle by means of a lamp aligned with the spindle of the pedal. Such an arrangement is disclosed in Belgium Patent No. 854.774 (Emile Gobert) filed 18 May 1977. The lateral illumination may be a useful safety feature at cross-roads, or other circumstances where the cycle is likely to be approached from the side, but the laterally mounted light provides virtually no rearward illumination to warn an approaching vehicle.

United States patent application 5,702,172 (Robert Kilbum) discloses a pedal with rearward facing Light Emitting Diodes (LEDs) that are switched on by an internal motion switch, or, the pressure of the cyclist's foot in a pedal cleat (or toecap). The LEDs are manually switched into an operable condition.

United States patent application 5,902,038 (Ernest Curry) discloses light emitters on one tread edge only of a pedal arranged to flash on and off and to include a time-out circuit to conserve the battery power source when the bicycle is idle. The assymetrical distribution of weight about the spindle of the pedal causes it to adopt a vertical position when idle so that a gravity switch disengages the power source. The rider's foot aligns the pedal in an horizontal position to activate the gravity switch.

It has also been proposed to use a dynamo on the spindle of a cycle pedal to power a buzzer and/or light emitting device to wam local vehicles or pedestrians of an approaching cyclist. This arrangement cannot be used to alert vehicles approaching the cyclist as it does not operate when the cyclist is stationary, such as when waiting at traffic lights. It may also be impractical as the dynamo output will fall when the pedals are rotating slowly, such as when the cyclist is in high gear.

The present invention seeks to provide a safety pedal for a cycle that, in use, it emits red light only to the rear so as to alerts the driver of an approaching vehicle. The pedal may be modified to also emit a non-red light, such as green, white or amber, to the front and/or side so as to also alert the driver of vehicles approaching from the front or side. The warning light should be eye-catching and may enhance light from reflectors on the pedals returned toward an approaching vehicle. The light emitted by the pedal may be continuous or may flash to be particularly eye-catching. The rotation of the pedals assists the eye-catching visibility of the emitted light.

According to a first aspect of the present invention there is provided a safety pedal, for emitting red light rearward but not forward relative to the direction of travel of a cycle, said pedal including a pedal frame having two sole plates and two directional edges, said frame being arranged to rotate about a spindle for connecting the pedal to the cycle so that the sole plates may be oriented to be either upper or lower sole plates relative to the spindle, characterised in that a first directional edge of the pedal includes a number of devices capable of emitting said red light, and that a second directional edge of the pedal includes a number of devices capable of emitting said red light, the rotation of the pedal about the spindle being such that each directional edge may be oriented either forward facing or rearward facing relative to said direction of travel, and further characterised in that switch means is provided to enable power to be supplied from a power source to only said number of rearward facing devices for emitting said red light and delay means is provided to maintain the supply of power for a preset period of time after the pedal is motionless.

The pedal may include timing means to maintain the coupling of the said number of devices to the power source after the force switch means has ceased to be activated so that the emission of red light persists from said number of rearward facing devices for said period of time.

The force switch means may consist of a pressure operable switch, or a number of pressure switches set in the sole plates of the pedal and arranged to be operated by the foot of a cyclist, or even a micro-switch arrangement within the frame of the pedal and bearing on the spindle of the pedal so that the movement of the frame relative to the spindle when a cyclist presses on the pedal operates the micro-switch.

The force switch means may include a movement sensitive switch, such as a gravity or mercury switch, arranged to be operated by movement of the pedal and arranged to facilitate the coupling of power from the power source when a cyclist moves the pedal. Alternatively, the force switch may be a capacitance or inductance actuated switch operated by the proximity of the foot of the cyclist pressing on the pedal.

A semi-conductor circuit arrangement may be connected to the force switch means so that the devices for emitting red light are included in both the forward facing edge and the rearward facing edge of the pedal. The circuit arrangement is also arranged to de-activate the forward facing devices for emitting red light are de-coupled from the power source.

The switch means may be arranged to be operable regardless of orientation or direction of rotation of the cycle pedals.

The supply of electrical power to the light emitting devices is preferably intermittent so that, in use, the emitted light flashes.

The light emitting devices are preferably semiconductor light emitting devices, known as LEDs, which are combined with reflectors set in the edges of the pedal. Alternatively, the light emitting devices may be filament lamps.

When the ambient lighting level is below a preset level an ambient light operable switch is arranged to enable the coupling of the power supply to the light emitting devices, the ambient light operable switch may be adjustable according to a number of preset ambient light levels, or continuously adjustable within a range of ambient lighting levels to allow for varistions in street lighting conditions.

A manually operable over-ride switch may be arranged to disable the ambient light operable switch means so that the light sensitive switch may be over-ridden by a cyclist wishing to ensure the emission of light regardless of the ambient light level and a manually operable on/off switch may be arranged to disable the operation of all the light emitting devices.

The safety pedal may also include a number of devices for emitting a non-red light, hereinafter called a "white" light, in which some of said number of devices for emitting white light form a forward facing set of LEDs, and some of said number of devices for emitting white light form a rearward facing set of LEDs, the arrangement being such that, in use, said forward facing set of LEDs are coupled to the power source, and the rearward facing set of LEDs are inhibited from being coupled to the power source.

The pedal may include rearward facing LED devices for emitting red light and rearward facing LED devices for emitting white light, and forward facing devices for emitting white light and forward facing devices for emitting red light, arranged so that only the red emitting rearward facing devices and the forward facing white light emitting devices are arranged to be coupled to a power source by way of the switch means for coupling the power supply. However, at the same time the supply of power from the power source to the rearward facing LED devices for emitting white light, and the forward facing red light emitting devices is inhibited.

The pedal may be weighted, including spring means, to ensure an orientation of the pedal so that said edge of the pedal containing the light emitting devices which in use emit red light faces to the rear of the cycle.

The pedal may include an ambient light delay means for delaying the switching off of the coupling to power supply to prevent the light emitting devices from being switched off when vehicle headlights or other occasional light sources illuminate the pedal.

The pedal may include a sound emitting device arranged to operate in parallel with operation of the light emitting devices.

According to a further aspect of the invention there is provided a safety pedal including a power switching circuit means, a number of forward facing and a number of rearward facing LEDs for emitting white light adjacent a number of forward facing and a number of rearward facing LEDs for emitting red light, said pedal being arranged, in use, so that only the rearward facing red light LEDs and the forward facing white light LEDs are coupled to a power source by the power switching means, and arranged so that the rearward facing LEDs for emitting white light and the forward facing LEDs for emitting red light are inhibited by the power switching circuit means from being connected to the power source.

The pedal may include a number of force sensitive switch means arranged to actuate the power switching circuit means which may include a bi-symmetrical circuit arrangement for controlling the power from the power source.

Preferably the power source batteries 3 which may be a removable dry or a re-chargeable battery is incorporated in a cavity in the pedal and the power switching circuit means is arranged to intermittently supply power to the LEDs to cause them to flash.

The frame of the pedal may incorporate an electrical socket through which the battery is rechargeable.

The pedal may include two force switches in the form of pressure sensitive switches or micro-switches, one in the upper face, and one in the lower face, of the pedal and each arranged to couple the rearward facing red light emitting devices to the power source when a cyclist presses on the upper face of the pedal.

It will be appreciated that the upper and lower faces, and the rearward and forward facing edges of the pedal alternate according to the orientation of the pedal. Therefore, the pedal is preferably symmetrical about the spindle axis.

This symmetry enables both the left side pedal and right side pedal of a cycle to be the substantially identical. The force switches may be arranged to operate in response to the small degree of play in the mounting of the spindle of the pedal. As a cyclist presses on the upper face of the pedal the relevant force switch associated with the rearward facing red light emitting devices is operated.

By linking the force switches to a gravity orientation switch the force switch on the lower face of the pedal may be inhibited allowing the cycle to be stored or parked when the lower face of the pedal is leant against a kerb. Alternatively both force switches may be inhibited by a motion sensor switch means or by the cyclist operating an on/off switch when required.

In many countries road traffic laws and regulations permit only red light may be emitted to the rear of a vehicle, except when the vehicle is reversing. Even in those countries in which it is not mandatory to show only red light to the rear, it is generally accepted that a red light is a warning signal. The light that is shown to the front of a vehicle may be white, green, amber or some other non-red light.

Cycles and tricycles for small children may utilise the operational features of the invention. Because such cycles are not subject to lighting restrictions they may emit red light in any direction.

In some circumstances it is beneficial to emit a non-red light from the forward facing edge or side of the pedal. In addition to red light emitting LEDs, non-red light LEDs are available that emit a range of colours of light such as: green, white, amber light.

It will be appreciated that throughout the specification reference to a "white light emitting device" or a "white LED" is to include any non-red light emitting device or non-red LED. The preferred LED for emitting red light is sold under the reference number HLMP-8100-RED, and a suitable green light emitting LED is sold under reference number HLMP-3950-GREEN.

An embodiment of the invention will now be described, by way of example, with reference to the accompanying diagrammatic drawings in which:
*Figure 1* shows a schematic cross-sectional plan view of a pedal including the safety lighting arrangement;
*Figure 2* shows the view of the pedal as seen in the direction of the arrow A;
*Figure 3* shows a cross-sectional view on the line B - B of *Figure 1*; and,
*Figure 4* shows diagrammatically the bi-symetrical circuit arrangement for a pedal as shown in *Figures 1* to *3*.

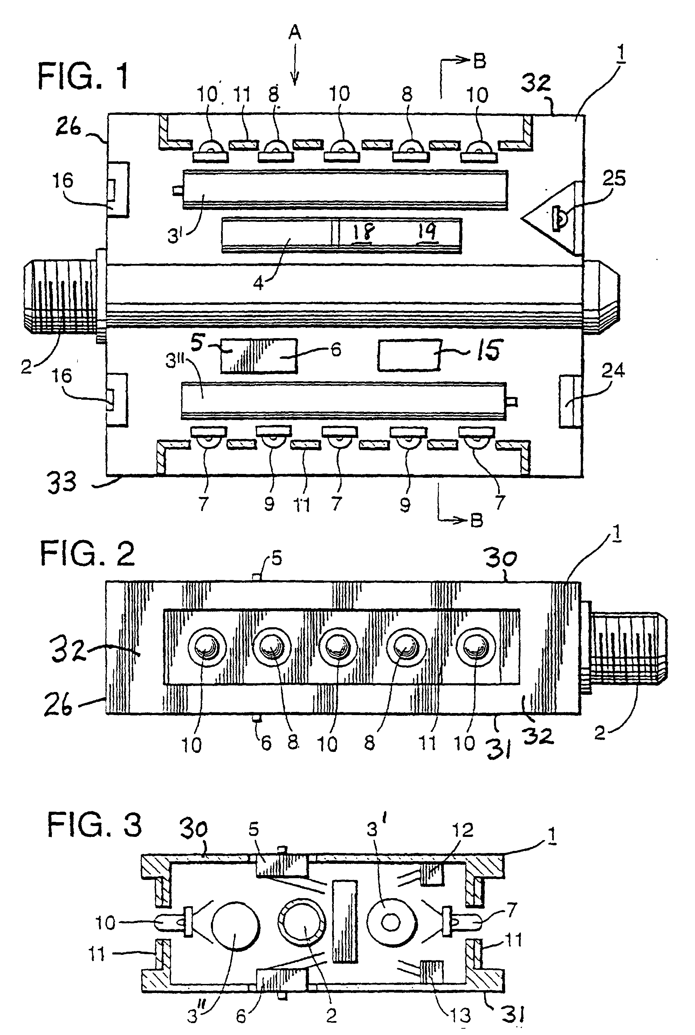

Referring now to *Figures 1* to *3,* a pedal **1** has a pedal spindle **2** for connecting the pedal **1** to the crank arm of a cycle. The pedal **1** includes batteries 3' and 3" located on both sides of the spindle **2** to act as a power source **3**.

The batteries may be rechargeable and coupled to terminals (not shown) located on the surface of the pedal and through which the batteries are arranged to be regularly recharged. The batteries may be recharged by a dynamo or solar cells located on the cycle. Alternatively, the batteries may be long life nickel-cadmium batteries that can be replaced by removing plugs 16 to access the battery compartments.

It has been found that the safety pedal arrangement was clearly visible up to one hundred metres rearward, and eighty metres forward, by using three light emitting devices (LEDs) sold under the reference number HLMP-8100 for red light, and either two green light LEDs sold under reference number HLMP-3950. The attention is drawn to the pedals by making the emitted light intermittent, i.e. flashing. The LEDs may be replaced by filament lamps or other electrically operated light emitting devices.

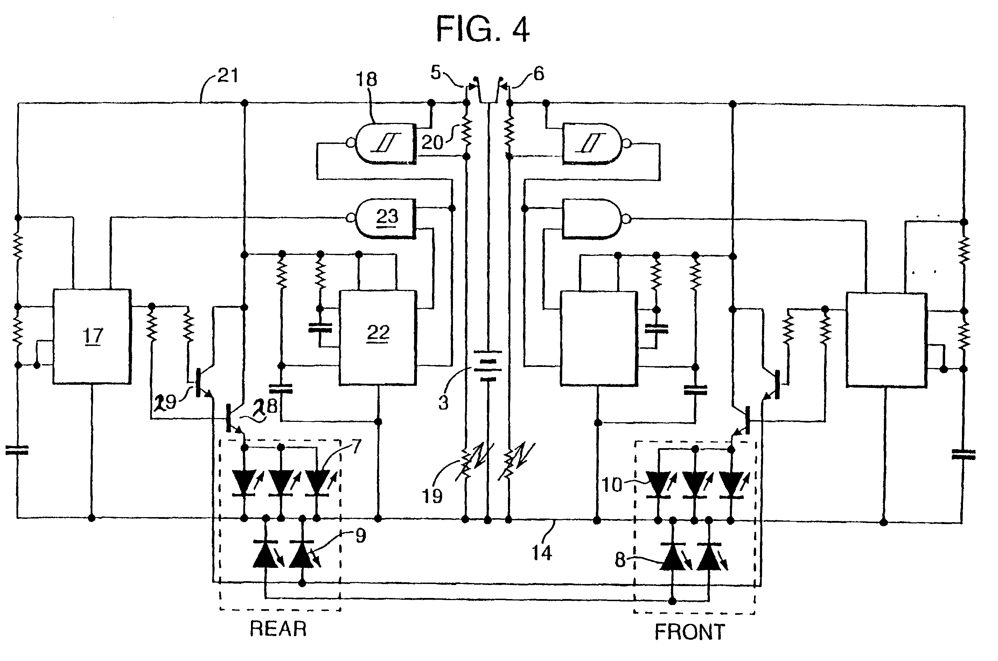

The power source **3** is coupled to the LEDs by way of a bi-symetrical circuit **4** (shown in detail in *Figure 4*). The circuit **4** is bi-symetrical with each half arranged to drive red light emitting devices in one end face of the pedal and white light emitting devices in the other end face.

The selection of which half of the circuit **4** is energised is determined by the operation of force sensitive micro-switches **5** and **6** located in the upper and lower faces respectively of the pedal **1**. Alternatively, and preferably, the force sensitive switches are located within the pedal and actuated by the small degree or play movement of the spindle **2** as the cyclist presses on the pedal.

When the switch **5** is closed the power source **3** is coupled by way of the flasher unit of one half of the circuit **4** to three rearward facing devices **7** for emitting red light, and also to two forward facing devices **8** for emitting white light. The rearward facing devices **7** are positioned interjacent two white light emitting devices **9** driven by the other half of the circuit **4.** Similarly, two white light emitting devices **8** on the forward facing edge of the pedal **1** are interjacent the three red light emitting devices **10**.

The driver circuits for the forward and the rearward facing light emitting devices are substantially identical. Therefore, when the pedal is turned through one hundred and eighty degrees the second micro-switch 6 is closed by the foot pressure of the cyclist and the red light devices at the other end face of the pedal 1, which is now rearward facing, are actuated.

The force sensor switches **5** and **6** may be connected in series with a gravity sensitive switch **12**, arranged so that only the switch on the upper face of the pedal couples the battery to the half of the circuit **4** actuating the rearward facing red light emitting devices and the forward facing white light emitting devices is energised. This arrangement allows the cyclist to park the cycle by resting the lower face of the pedal against a kerb so operating the lower force switch but without actuating the circuit **4** although the force sensitive switch is closed.

It will be appreciated that the force sensor switches **5** and **6** may be capacitive or inductive proximity switches actuated by the foot sole of the cyclist.

It will also be appreciated that a sensor switch **13** actuated by motion may replace the switches **5** and **6**. When the cyclist is at traffic lights, an off time delay should be added to maintain circuit actuation to ensure that light is still emitted from the pedal when it is motionless.

The pedal may be weighted, or may have toe-clips on one side, so that one edge of the pedal will always face rearward. This eliminates the need for half of the circuit **4** and the symmetrically positicned forward and rearward facing LEDs. That is to say, white light emitting LEDs only are located in the forward facing edge, and only red light emitting LEDs are located in the rearward facing edge of the pedal.

The light emitting devices LEDs **7, 8, 9** and **10** are recessed into the rearward and forward facing edges of the pedal 1. The recesses in the forward and rear edges contain reflector plates **11** through which the LED devices protrude. The reflector plates **11** are preferably coloured amber or red. The pedal may be simplified by having only one forward facing white LED, only one forward facing red LED, only one rearward facing red LED, and, only one rearward facing white LED. The battery **3** is preferably a long-life Nickel-Hydride battery or it may be a Lithium battery capable of maintaining normal operation of the pedal LEDs for a year.

The pedal **1** is arranged to rotate about the spindle **2** with the red light LED devices **7** facing rearward and the white light LED devices facing forward of the cycle. This ensures that an observer, such as an approaching car, at the rear of the cyclist observes red light, whereas, an observer in front of the cyclist sees white light. The pedal may rotate in a clockwise or anticlockwise direction, and the circuit arrangement is arranged to operate regardless of orientation or direction of rotation.

By ensuring that the forward facing devices **10**, for emitting red light, are inhibited, an observer is not confused about the direction of travel of the cyclist.

Referring now also to *Figure* 4 the circuit arrangement **4** includes the power source **3**, one pole of which is connected to a common earth line **14,** and the other pole of which is connected to the force sensitive micro-switches **5** and **6**. As each of the switches **5** and **6** are on opposite sides of the pedal so that only one is operated at a time depending on which side is uppermost, this ensures that only one half of the circuit **4** is energised at a time.

As the circuit arrangement **4** includes two substantially identical circuits only one of which will be described in detail. The left hand side of the circuit **4** of *Figure 4* comprises an integrated circuit flasher unit **17,** such as ICM 7555, coupled via a driver transistor **28** to the red light emitting LEDs **7** in the (REAR) edge of the pedal, and coupled via another driver transistor **29** to the white light emitting LEDs **8** in the forward facing (FRONT) edge of the pedal.

A delay device **18** is connected to a potential divider comprising a resistor **20** and a light sensitive resistor **19**, which is arranged to enable the operation of the flasher circuit when the intensity of the ambient light falls below a preset level. The resistor **19** may be fixed during manufacture or arranged to be adjusted over a continuous range of ambient light levels by the cyclist. Therefore the resistor **19** may include a number of preset adjustments or may be continuously adjustable.

The device **18** has a built in hysteresis so that the circuit is not immediately de-energised when the ambient light level falling on the pedal suddenly rises above the set level, such as when the headlights of a car illuminate the pedal for a transient period.

In use the pedal **1** is substantially equivalent in mechanical performance to a standard form of pedal. The mounting onto the cycle uses a standard form of spindle **2**.

When a cyclist mounts the cycle and places a foot on the pedal, the force switch **5** connects the power source **3** to a power line **21** that supplies power to the flasher units **17**. If the ambient light level is sufficiently low the light sensitive resistor **19** is arranged to operate the circuit **18** which provides an enabling signal to an integrated circuit **22** and via a device **23** to the flasher unit **17**. It will be appreciated that the symmetrical circuit energised by the closure of the switch **6** operates in a similar manner when the pedal is rotated through one hundred and eighty degrees.

As the pedal **1** rotates through three hundred and sixty degrees the end faces of the pedal may be either forward or rearward facing. An orientation sensitive gravity force switch **15** (not shown in *Figure 4)* may be provided in place of the switches **5** and **6** to enable the LEDs for emitting red light that face rearward and to enable the LEDs for emitting white light that face forward, and to inhibit the other LEDs.

The pedal may be fitted with an audible alarm **24** (shown in *Figure 1*), and LEDs **25** for emitting orange light may be set in the side of the pedal to warn vehicles approaching from the side. The side facing LEDs **25** may be arranged to flash or to be continually lit.

An on/off switch coupled to the power source may be incorporated in the pedal so that the cyclist can turn off the circuit arrangement. An over-ride switch, which may be combined with the on/off switch, may be provided so that the cyclist ensures that the circuit arrangement is actuated and light is emitted under all road, motion and ambient lighting conditions.

It will be appreciated that the force sensor switch means may be actuated by the movement of the spindle actuating one or more micro-switches, or directly by the foot of the cyclist. The actuation may be by inductive or capacitive coupling of the foot sole of the cyclist as the foot presses on the pedal.

Pedals incorporating the invention may replace existing pedals, alternatively, a circuit arrangement including LEDs, battery and sensor switch means may be encapsulated in a module that can be fitted within an existing pedal.

## Claims

1. A safety pedal (**1**), for emitting red light rearward but not forward relative to the direction of travel of a cycle, said pedal (**1**) including a pedal frame (**26**) having two sole plates (**30, 31**) and two directional edges (**32, 33**), said frame (**26**) being arranged to rotate about a spindle (**2**) for connecting the pedal (**1**) to the cycle so that the sole plates (**30, 31**) may be oriented to be either upper or lower sole plates relative to the spindle (**2**),
a first directional edge (**32**) of the pedal (**1**) includes a number of devices (**10**) capable of emitting said red light,
**characterised in that**
a second directional edge (**33**) of the pedal (**1**) includes a number of devices (**7**) capable of emitting said red light, the rotation of the pedal (**1**) about the spindle (**2**) being such that each directional edge (**32, 33**) may be oriented either forward facing or rearward facing relative to said direction of travel, and further **characterised in that**
switch means (**5**, **6**) is provided to enable power to be supplied from a power source (**3**) to only said number of rearward facing devices (**7** or **10**) for emitting said red light and delay means (**18**) is provided to maintain the supply of power for a preset period of time after the pedal (**1**) is motionless.

2. A pedal as claimed in claim 1, including timing means (**18**) to maintain the coupling of the said number of devices (**7** or **10**) to the power source (**3**) after the switch means (**5, 6**) has ceased to be activated so that the emission of said red light persists from said number of rearward facing devices (**7 or 10**) for a period of time.

3. A pedal as claimed in any preceding claim in which the switch means (**5**, **6**) consists of a pressure switch operatable by the force exerted by a cyclist pressing on the pedal.

4. A pedal as claimed in claim **3**, in which the pressure switch consists of a micro-switch arrangement bearing on the spindle of the pedal.

5. A pedal as claimed in claim **3**, in which the pressure switch consists of piezo-responsive switch material set into the upper and lower sole plates (**30, 31**) arranged so that only the piezo responsive material in the upper sole plate (**30 or 31**) is operated by the force exerted by a cyclist pressing on the pedal.

6. A pedal as claimed in any of claims **1** or **2**, in which the switch means (**5, 6**) consists of a number of proximity switches set in the sole plates of the pedal and arranged to be operated by the presence of the foot of a cyclist.

7. A pedal as claimed in any of claims **1** or **2,** in which the switch means (**5**, **6**) includes a motion sensitive switch mounted in the pedal and arranged to be operated when a cyclist moves the pedal.

8. A pedal as claimed in any preceding claim including a circuit arrangement connected to the switch means **(5, 6)** and in which a number of devices **(7, 10)** for emitting said red light are included in both the forward facing directional edge **(32)** and the rearward facing directional edge **(33)** of the pedal, said circuit arrangement being arranged, in use, so that said forward facing devices (**10**) capable of emitting red light are de-coupled from the power source (**3**) when the switch means (**5**) in the upper sole plate (**30**) is operated.

9. A pedal as claimed in any preceding claim in which the switch means (**5, 6**) is arranged to be operable regardless of orientation or direction of rotation of the pedal (**1**) about the spindle (**2**).

10. A pedal as claimed in any preceding claim in which the supply of electrical power to said number of devices is intermittent so that, in use, the emitted light flashes.

11. A pedal as claimed in any preceding claim in which said number light emitting devices (**7, 10**) are combined with reflectors (**11**) set in the directional edges (**32, 33**) of the pedal (**1**).

12. A pedal as claimed in any preceding claim in which the light emitting devices are semiconductor light emitting diode devices, known as LEDs.

13. A pedal as claimed in any of claims **1** to **11,** in which the light emitting devices are filament lamps.

14. A pedal as claimed in any preceding claim including an ambient light sensitive switch means (**19**) arranged to couple the power supply to said number of light emitting devices (**7**), when the ambient lighting level is below a preset level.

15. A pedal as claimed in claim **14**, in which hysteresis is incorporated into the operation of the circuit arrangement so that the power source (**3**) is coupled to the rearward facing red light emitting devices (**7 or 10)** when the ambient light level is substantially the same as the preset setting switching level and remains coupled until the level of ambient light increases to a level substantially greater than the preset level, when the light sensitive switch means (**19**) de-couples the power source (**3**).

16. A pedal as claimed in claim **14** or claim **15**, in which the ambient light sensitive switch (**19**) is adjustable according to a number of preset ambient light levels.

17. A pedal as claimed in claim **14** or claim **15**, in which the light sensitive switch is continuously adjustable to operate within a range of ambient lighting levels to allow for variations in street lighting conditions.

18. A pedal as claimed in any preceding claim including a manually operable over-ride switch the operation of which is arranged to disable the ambient light operable switch means (**19**) so that the light sensitive switch may be over-ridden by a cyclist wishing to ensure the emission of said red light regardless of the ambient light level.

19. A pedal as claimed in any of the preceding claims including a manually operable on/off switch arranged to disable the operation of all the light emitting devices.

20. A pedal as claimed in any of claims **1** to **19,** in which the pedal **(1)** includes a number of devices **(8, 9)** capable of emitting a white light in which some of said number of devices capable of emitting white light form a forward facing set **(8)** of LEDs, and some of said number of devices capable of emitting white light form a rearward facing set **(9)** of LEDs, the arrangement being such that, in use, said forward facing set (**8**) of LEDs are coupled to the power source (**3**), and the rearward facing set (**9**) of LEDs are inhibited from being coupled to the power source.

21. A safety pedal as claimed in claim **20**, comprising rearward facing red light LED devices (**7**) or (**10**) and rearward facing LED devices (**8**, **9**) capable of emitting white light, said rearward facing red light LED devices being arranged to be coupled to a power source (**3**) each by way of a switch means (**4**) for coupling the power supply to the rearward facing LED devices (**8**), and for inhibiting the coupling of the power source to the rearward facing white light LED devices (**9**), so that, in use, the supply of power from the power source is connected to the rearward red light LED devices (**7**), but inhibited from connection to the power source to the rearward facing white light LED devices **(9),** and wherein the pedal **(1)** is also provided with forward facing white light LED devices **(8)** and forward facing LED devices **(10)** capable of emitting red light, said forward facing white light LED devices being arranged to be coupled to the power source (**3**) by way of a power supply switching means arranged, in use, so that power is supplied to the white light LED devices, and also so that the supply of power from the power source to the forward facing LED devices for emitting red light is inhibited.

22. A pedal as claimed in any preceding claim including transient ambient light delay means **(18)** for delaying the switching off of the coupling to power supply to prevent the light emitting devices being switched off when other vehicle headlights illuminate the pedal.

23. A safety pedal for a cycle including
a power switching circuit means;
a number of forward facing (**10**) and a number of rearward facing (**9**) LEDs capable of emitting white light adjacent a number of forward facing (**8**) and a number of rearward facing (**7**) LEDs capable of emitting red light, said pedal (**1**) being arranged, in use, so that only the rearward facing red light LEDs and the forward facing white light LEDs are coupled to a power source (**3**) by the power switching means, and arranged so that the rearward facing LEDs capable of emitting white light and the forward facing LEDs capable of emitting red light are inhibited by the power switching circuit means from being connected to the power source.

24. A safety pedal as claimed in claim **23,** including a number of force sensitive switch means arranged to actuate the power switching circuit means.

25. A safety pedal for a cycle as claimed in claim **23** or claim **24**, in which the power switching circuit means includes a bi-symmetrical circuit arrangement for controlling the power from the power source.

26. A pedal as claimed in claim **25**, in which the power source is incorporated in the pedal and the power switching circuit means is arranged to intermittently supply power to the LEDs to cause them to flash.

27. A pedal as claimed in claim **26**, including a cavity for housing the power source in the form of a battery which is removable for replacement.

28. A pedal as claimed in claim **26**, in which the power source is a rechargeable battery.

29. A pedal as claimed in claim **28**, in which socket terminals are provided on the pedal through which the battery is rechargeable.

30. A pedal as claimed in any preceding claim including an audible warming device arranged to operate from the same power source and at the same time as the red light emitting devices.

31. A pedal as claimed in any preceding claim in which said number of devices for emitting red light facing to the rear of the cycle, and said number of devices for emitting white light facing to the forward of the cycle, and said number of force sensitive switch means, is each one.

## Patentansprüche

1. Sicherheitspedal (1), das rotes Licht im Verhältnis zur Fahrtrichtung eines Fahrrades nach hinten, aber nicht nach vorne ausstrahlt, besagtes Pedal (1) bestehend aus einem Pedalrahmen (26) mit zwei Grundplatten (30, 31) und zwei Richtkanten (32, 33), wobei besagter Rahmen (26) zur Verbindung des Pedals (1) mit dem Fahrrad drehbar an einem Achszapfen (2) angeordnet ist, so dass die Grundplatten (30, 31) im Verhältnis zum Achszapfen (2) oben oder unten liegen können, **dadurch gekennzeichnet, dass** eine erste Richtkante (32) des Pedals (1) eine Reihe von Einrichtungen (10) enthält, die besagtes rotes Licht ausstrahlen können, eine zweite Richtkante (33) des Pedals (1) eine Reihe von Einrichtungen (7) enthält, die besagtes rotes Licht ausstrahlen können, wobei die Drehung des Pedals (1) um den Achszapfen (2) so erfolgt, dass jede Richtkante (32, 33) im Verhältnis zu besagter Fahrtrichtung nach vorne oder nach hinten gekehrt sein kann, und ferner **dadurch gekennzeichnet, dass**
Schaltmittel (5, 6) vorgesehen sind, welche nur besagte nach hinten gekehrte Einrichtungen (7 oder 10) zum Ausstrahlen von rotem Licht mit Strom aus einer Quelle (3) versorgen, und dass Verzögerungsmittel (18) vorgesehen sind, welche die Stromversorgung nach dem Stillstand des Pedals (1) für eine vorgegebene Zeitspanne erhalten.

2. Pedal nach Anspruch 1, mit Zeitgebern (18) zur Erhaltung der Verbindung der besagten Einrichtungen (7 oder 10) mit der Stromquelle (3) nach Ausschalten der Schaltmittel (5,6), so dass die nach hinten gekehrten Einrichtungen (7 oder 10) für eine gewisse Zeit weiterhin besagtes rotes Licht ausstrahlen.

3. Pedal nach einem der vorhergehenden Ansprüche, in welchem die Schaltmittel (5, 6) aus einem Druckschalter bestehen, der von der vom Radfahrer auf das Pedal ausgeübten Kraft betätigbar ist.

4. Pedal nach Anspruch 3, in welchem der Druckschalter aus einer auf den Achszapfen des Pedals wirkenden Mikroschalteranordnung besteht.

5. Pedal nach Anspruch 3, in welchem der Druckschalter aus einem piezoelektrisch ansprechenden, in die oberen und unteren Grundplatten (30, 31) eingelassenen Schaltermaterial besteht, so dass nur das piezoelektrisch ansprechende Material in der oberen Grundplatte (30 oder 31) von der vom Radfahrer auf das Pedal ausgeübten Kraft betätigt wird.

6. Pedal nach Anspruch 1 oder 2, in welchem die Schaltmittel (5, 6) aus einer Reihe von in die Grundplatten des Pedals eingelassenen Näherungsschaltern bestehen, die so angeordnet sind, dass sie auf die Anwesenheit des Fußes eines Radfahrers ansprechen.

7. Pedal nach Anspruch 1 oder 2, in welchem die Schaltmittel (5, 6) einen im Pedal angeordneten auf Bewegung ansprechenden Schalter beinhalten, der so angeordnet ist, dass er bei Bewegung des Pedals durch einen Radfahrer betätigt wird.

8. Pedal nach einem der vorhergehenden Ansprüche, mit einer an die Schaltmittel (5, 6) angeschlossenen Schaltungsanordnung, und in welchem eine Reihe von Einrichtungen (7, 10) zum Ausstrahlen von besagtem rotem Licht sowohl in der nach vorne gekehrten Richtkante (32) als auch in der nach hinten gekehrten Richtkante (33) des Pedals vorgesehen ist, wobei besagte Schaltungsanordnung im Betrieb so angeordnet ist, dass besagte nach vorne gekehrte Einrichtungen (10) zum Ausstrahlen von rotem Licht bei Betätigung der Schaltmittel (5) in der oberen Grundplatte (30) von der Stromquelle (3) getrennt werden.

9. Pedal nach einem der vorhergehenden Ansprüche, in welchem die Schaltmittel (5, 6) so angeordnet sind, dass sie ungeachtet der Lage oder Drehrichtung des Pedals (1) um den Achszapfen (2) betätigt werden können.

10. Pedal nach einem der vorhergehenden Ansprüche, in welchem die Stromversorgung besagter Einrichtungen intermittierend ist, so dass das ausgestrahlte Licht im Betrieb blinkt.

11. Pedal nach einem der vorhergehenden Ansprüche, in welchem besagte Licht ausstrahlende Einrichtungen (7, 10) mit in die Richtkanten (32, 33) des Pedals (1) eingelassenen Reflektoren (11) kombiniert sind.

12. Pedal nach einem der vorhergehenden Ansprüche, in welchem die Licht ausstrahlenden Einrichtungen unter der Bezeichnung LED bekannte Halbleiter-Leuchtdioden sind.

13. Pedal nach einem der Ansprüche 1 bis 11, in welchem die Licht ausstrahlenden Einrichtungen Glühlampen sind.

14. Pedal nach einem der vorhergehenden Ansprüche, mit einem auf Umlicht ansprechenden Schaltmittel (19), das so angeordnet ist, dass die Stromversorgung besagter Licht ausstrahlender Einrichtungen (7) bei Unterschreiten eines vorgegebenen Umlichtpegels angeschlossen wird.

15. Pedal nach Anspruch 14, in welchem Hysterese in die Funktion der Schaltungsanordnung eingebaut ist, so dass die Stromquelle (3) an die nach hinten gekehrten rotes Licht ausstrahlenden Einrichtungen (7 oder 10) angeschlossen wird, wenn der Umlichtpegel im Wesentlichen dem vorgegebenen Schaltpegel gleich ist, und angeschlossen bleibt, bis der Umlichtpegel den vorgegebenen Pegel erheblich überschreitet, worauf das auf Licht ansprechende Schaltmittel (19) die Stromquelle (3) trennt.

16. Pedal nach Anspruch 14 oder 15, in welchem der auf Umlicht ansprechende Schalter (19) auf eine Reihe von vorgegebenen Umlichtpegeln einstellbar ist.

17. Pedal nach Anspruch 14 oder 15, in welchem der auf Licht ansprechende Schalter zur Berücksichtigung von unterschiedlichen Straßenbeleuchtungsverhältnissen innerhalb eines gegebenen Umlichtpegelbereichs stufenlos einstellbar ist.

18. Pedal nach einem der vorhergehenden Ansprüche, mit einem manuell betätigbaren Übersteuerungsschalter, der bei Betätigung die am Umlicht ansprechenden Schaltmittel (19) unwirksam macht, so dass der auf Licht ansprechende Schalter von einem Radfahrer, der ungeachtet des Umlichtpegels die Ausstrahlung des besagten roten Lichtes gewährleisten will, übersteuert werden kann.

19. Pedal nach einem der vorhergehenden Ansprüche, mit einem manuell betätigbaren Ein/Ausschalter zum Abschalten aller Licht ausstrahlenden Einrichtungen.

20. Pedal nach einem der Ansprüche 1 bis 19, in welchem das Pedal (1) eine Reihe von Einrichtungen (8, 9) enthält, die weißes Licht ausstrahlen können, wobei einige der besagten Einrichtungen zum Ausstrahlen von weißem Licht einen nach vorne gekehrten Satz (8) von LED und einige der besagten Einrichtungen zum Ausstrahlen von weißem Licht einen nach hinten gekehrten Satz (9) von LED bilden und die Anordnung so getroffen ist, dass besagter nach vorne gekehrter Satz (8) von LED an die Stromquelle (3) angeschlossen ist und besagter nach hinten gekehrter Satz (9) von LED nicht an die Stromquelle angeschlossen werden kann.

21. Pedal nach Anspruch 20, mit nach hinten gekehrten roten LED Einrichtungen (7) oder (10) und nach hinten gekehrten LED Einrichtungen (8, 9), die weißes Licht ausstrahlen können, wobei besagte rote LED Einrichtungen so angeordnet sind, dass sie jeweils über Schaltmittel (4) zum Anschließen der Stromversorgung an die nach hinten gekehrten LED Einrichtungen (8) und zum Verhindern des Anschlusses der Stromquelle an die nach hinten gekehrten weißen LED Einrichtungen (9) an die Stromquelle (3) angeschlossen werden, so dass im Betrieb die Stromversorgung aus der Stromquelle an die nach hinten gekehrten roten LED Einrichtungen (7) angeschlossen wird, aber der Anschluss der Stromquelle an die nach hinten gekehrten weißen LED Einrichtungen (9) verhindert wird, und wobei das Pedal (1) auch mit nach vorne gekehrten weißen LED Einrichtungen (8) und nach vorne gekehrten rotes Licht ausstrahlenden LED Einrichtungen (10) ausgestattet ist und besagte nach vorne gekehrte weiße LED Einrichtungen so angeordnet sind, dass sie über ein Stromschaltmittel an die Stromquelle (3) angeschlossen werden, das im Betrieb so angeordnet ist, dass die weißen LED Einrichtungen mit Strom versorgt werden und die Stromversorgung der nach vorne gekehrten rotes Licht ausstrahlenden LED Einrichtungen aus der Stromquelle verhindert wird.

22. Pedal nach einem der vorhergehenden Ansprüche, mit Verzögerungsmitteln (18) für momentanes Umlicht zum Verzögern der Unterbrechung der Stromversorgung, damit die Licht ausstrahlenden Einrichtungen nicht abgeschaltet werden, wenn die Scheinwerfer anderer Fahrzeuge das Pedal beleuchten.

23. Sicherheitspedal für ein Fahrrad, mit
einer Stromschaltung;
einer Reihe von nach vorne gekehrten (10) und nach hinten gekehrten (9) LED, die weißes Licht ausstrahlen können, neben einer Reihe von nach vorne gekehrten (8) und nach hinten gekehrten (7) LED, die rotes Licht ausstrahlen können, wobei besagtes Pedal (1) im Betrieb so angeordnet ist, dass nur die nach hinten gekehrten roten LED und die nach vorne gekehrten weißen LED durch die Stromschaltung an eine Stromquelle (3) angeschlossen werden, und wobei die Stromschaltung den Anschluss der nach hinten gekehrten weißes Licht ausstrahlenden LED und der nach vorne gekehrten rotes Licht ausstrahlenden LED an die Stromquelle verhindert.

24. Sicherheitspedal nach Anspruch 23, mit einer Reihe von auf Kraft ansprechenden Schaltmitteln zur Aktivierung der Stromschaltung.

25. Sicherheitspedal nach Anspruch 23 oder 24, in welchem die Stromschaltung eine streng symmetrische Schaltungsanordnung zur Regelung der Stromversorgung aus der Stromquelle beinhaltet

26. Pedal nach Anspruch 25, wobei die Stromquelle in das Pedal eingebaut ist und die Stromschaltung zur intermittierenden Stromversorgung der LED ausgelegt ist, um diese zum Blinken zu veranlassen.

27. Pedal nach Anspruch 26, mit einer Ausnehmung zur Aufnahme der Stromquelle in Form einer Batterie, die zur Erneuerung ausgebaut werden kann.

28. Pedal nach Anspruch 26, in welchem die Stromquelle eine aufladbare Batterie ist.

29. Pedal nach Anspruch 28, in welchem am Pedal Anschlussbuchsen vorgesehen sind, über welche die Batterie aufgeladen werden kann.

30. Pedal nach einem der vorhergehenden Ansprüche, mit einer akustischen Warneinrichtung, die von der selben Stromquelle und zur gleichen Zeit wie die rotes Licht ausstrahlenden Einrichtungen betätigt wird.

31. Pedal nach einem der vorhergehenden Ansprüche, in welchem besagte Einrichtungen zum Ausstrahlen von rotem Licht, die der Rückseite des Fahrrades zugekehrt sind, und besagte Einrichtungen zum Ausstrahlen von weißem Licht, die der Vorderseite des Fahrrades zugekehrt sind, und besagte auf Kraft ansprechende Schaltmittel jeweils eins sind.

## Revendications

1. Une pédale de sûreté (1) pour émettre un éclairage rouge vers l'arrière mais non vers l'avant par rapport à la direction du mouvement d'un cycle, ladite pédale (1) incluant un corps (26) configuré avec deux surfaces à semelles (30, 31) et deux tranches directionelles (32. 33), ledit corps (36) étant configuré pour entrer en rotation autour d'un axe (2) connectant la pédale (1) au cycle, de manière à ce que lesdites surfaces à semelles (30, 31) soient orientées pour être soit surfaces supérieures soit surfaces inférieures par rapport audit axe (2), ladite pédale étant **caractérisée par**
une première tranche directionelle (32) de la pédale (1) incluant un nombre de moyens (10) capables d'émettre ledit éclairage rouge,
une deuxième tranche directionelle (33) de la pédale (1) incluant un nombre de moyens (7) capables d'émettre ledit éclairage rouge,
la rotation de la pédale (1) relative à l'axe (2) étant telle que chaque tranche directionelle (32, 33) peut être orientée vers l'avant ou l'arrière par rapport à la direction du mouvement, ladite pédale étant davantage **caractérisée par** des moyens d'activation (5, 6) pour permettre à une source d'énergie (3) de fournir de l'énergie uniquement auxdits moyens (7 ou 10) orientés vers l'arrière pour émettre ledit éclairage rouge, ainsi que des moyens de retardement (18) pour maintenir la fourniture d'énergie durant une période pré-déterminée après que l'activation de la pédale ait cessé.

2. Une pédale selon la revendication 1, incluant des moyens de chronométrage (18) pour maintenir la connexion entre lesdits moyens (7 ou 10) et la source d'énergie (3), après que l'activation desdits moyens d'activation (5, 6) ait cessé, de manière à ce que l'émission dudit éclairage rouge par lesdits moyens (7 ou 10) orientés vers l'arrière persiste pendant une période de temps.

3. Une pédale selon l'une des revendications précédentes, dont les moyens d'activation (5, 6) comprennent un interrupteur à pression activé par la pression exercée par un cycliste appuyant sur la pédale.

4. Une pédale selon la revendication 3, dont l'interrupteur à pression comprend un arrangement de micro-interrupteurs au contact de l'axe de la pédale.

5. Une pédale selon la revendication 3, dont l'interrupteur à pression comprend un matériau d'activation piezo-responsif disposé sur chaque surface à semelles (30, 31) et configuré de manière à ce que le matériau d'activation piezo-responsif disposé sur la surface à semelles supérieure (30 ou 31) uniqement soit activé par la pression exercée par un cycliste appuyant sur la pédale.

6. Une pédale selon l'une des revendications 1 ou 2, dont les moyens d'activation (5, 6) comprennent un nombre d'interrupteurs de proximité disposés sur les surface à semelles de la pédale et configurés pour être activés par la présence du pied d'un cycliste.

7. Une pédale selon l'une des revendications 1 ou 2, dont les moyens d'activation (5, 6) comprennent un interrupteur sensible au mouvement monté dans la pédale et configuré pour être activé par l'opération de la pédale par un cycliste.

8. Une pédale selon l'une des revendications précédentes, incluant un circuit connecté aux moyens d'activation (5, 6) dans lequel un nombre de moyens (7 ou. 10) pour émettre ledit éclairage rouge sont inclus dans la tranche directionelle avant (32) ainsi que la tranche directionelle arrière (33) de la pédale, ledit circuit étant configuré pendant usage de manière à ce que lesdits moyens (10) pour émettre l'éclairage rouge orientés vers l'avant sont déconnectés de la source d'énergie (3) quand les moyens d'activation (5) de la surface à semelles supérieure (30) sont activés.

9. Une pédale selon l'une des revendications précédentes, dont les moyens d'activation (5, 6) sont configurés pour être activés indépendemment de l'orientation ou de la direction de rotation de la pédale (1) par rapport à l'axe (2).

10. Une pédale selon l'une des revendications précédentes, dont la fourniture d'énergie électrique auxdits moyens est intermittente, de manière à ce que l'éclairage émis pendant usage clignote.

11. Une pédale selon l'une des revendications précédentes, dont les moyens pour émettre un éclairage (7, 10) sont combinés avec des réflecteurs (11) disposés sur les tranches directionelles (32, 33) de la pédale (1).

12. Une pédale selon l'une des revendications précédentes, dont dont les moyens pour émettre un éclairage sont des diodes semiconductrices émettant un éclairage, connues sous l'abbréviation LED.

13. Une pédale selon l'une des revendications 1 à 11, dont les moyens émettant un éclairage sont des lampes à filament.

14. Une pédale selon l'une des revendications précédentes, configurée avec des moyens d'activation photo-sensibles (19) couplant la source d'énergie auxdits moyens pour émettre un éclairage (7) quand la lumière ambiante passe sous un niveau pré-déterminé.

15. Une pédale selon la revendication 14, dans laquelle le principe d'hystérésie est incorporé dans l'opération du circuit pour connecter la source d'énergie (3) aux moyens pour émettre un éclairage orientés vers l'arrière (7 ou 10) quand la lumière ambiante est équivalente au niveau d'activation pré-déterminé, et reste connectée jusqu'à ce que le niveau de lumière ambiante augmente au-delà dudit niveau activation pré-déterminé, lorsque les moyens d'activation photo-sensibles (19) déconnectent la source d'énergie (3).

16. Une pédale selon l'une des revendications 14 ou 15, dont les moyens d'activation photo-sensibles (19) sont ajustables selon un nombre de niveaux de lumière ambiante pré-déterminés.

17. Une pédale selon l'une des revendications 14 ou 15, dont les moyens d'activation photo-sensibles sont continuellement ajustables pour opérer dans une gamme de niveaux de lumière ambiante, afin de prendre en compte les variations du niveau de lumière ambiante engendrés par l'éclairage public.

18. Une pédale selon l'une des revendications précédentes, configurée avec un interrupteur activé manuellement, dont l'activation déconnecte les moyens d'activation photo-sensibles (19), afin que le cycliste s'assure que l'éclairage rouge est émis indépendemment du niveau de lumière ambiante.

19. Une pédale selon l'une des revendications précédentes, configurée avec un interrupteur activé manuellement, dont l'activation termine l'opération de tous les moyens pour émettre un d'éclairage.

20. Une pédale selon l'une des revendications 1 à 19, incluant un nombre de moyens (8, 9) capables d'émettre un éclairage blanc, certains desdits moyens capables d'émettre un éclairage blanc formant un groupe (8) de LEDs orienté vers l'avant et certains desdits moyens capables d'émettre un éclairage blanc formant un groupe (9) de LEDs orienté vers l'arrière, l'arrangement étant tel que durant usage, ledit groupe (8) de LEDs avant est connecté à la source d'énergie (3) et le groupe (9) de LEDs arrière ne peut être connecté à la source d'énergie.

21. Une pédale selon la revendication 20, incluant des moyens (7) ou (10) émetteurs d'éclairage rouge et des moyens LED (8, 9) émetteurs d'éclairage blanc orientés vers l'arrière, chacun desdits moyens émetteurs d'éclairage rouge étant configuré pour être connecté à une source d'énergie (3) par des moyens d'activation (4) connectant ladite source d'énergie aux moyens (8) émetteurs d'éclairage blanc et empêchant l'accouplage dès moyens (9) émetteurs d'éclairage blanc à ladite source d'énergie, telle que en usage, l'énergie est fournie depuis la source d'énergie aux moyens (7) émetteurs d'éclairage rouge mais non pas aux moyens (9) émetteurs d'éclairage blanc, ladite pédale (1) étant également configurée avec des moyens LED (8) émetteurs d'éclairage blanc et des moyens LED (10) émetteurs d'éclairage rouge orientés vers l'avant, lesdits moyens émetteurs d'éclairage blanc étant configurés pour être connectés à une source d'énergie (3) par des moyens d'activation tels que, en usage, l'énergie est fournie depuis la source d'énergie aux moyens émetteurs d'éclairage blanc mais non pas aux moyens émetteurs d'éclairage rouge.

22. Une pédale selon l'une des revendications précédentes, configurée avec des moyens de retardement (18) de la lumière ambiante transiente, pour retarder l'interruption de la connexion à la souce d'énergie, afin d'éviter que les moyens émetteurs d'éclairage soient éteints lorsque les phares d'autres véhicules illuminent la pédale.

23. Une pédale de sûreté pour un cycle, incluant
des moyens de fournir de l'énergie à un circuit;
un nombre de LEDs capables d'émettre un éclairage blanc orientés vers l'avant (10) et vers l'arrière (9) adjacents à un nombre de LEDs capables d'émettre un éclairage rouge orientés vers l'avant (8) et vers l'arrière (7), ladite pédale (1) étant configurée, pendant utilisation, pour que les LEDs émetteurs d'éclairage rouge orientés vers l'arrière et les LEDs émetteurs d'éclairage blanc orientés vers l'avant uniquement soient connectés à une source d'énergie (3) par lesdits moyens de fournir de l'énergie, et pour que les LEDs émetteurs d'éclairage rouge orientés vers l'avant et les LEDs émetteurs d'éclairage blanc orientés vers l'arrière uniquement ne puissent pas être connectés par lesdits moyens de fournir de l'énergie à la source d'énergie.

24. Une pédale selon la revendication 23, configurée avec des moyens sensibles à la force configurés pour activer les moyens de foumir de l'énergie à un circuit.

25. Une pédale selon l'une des revendications 23 ou 24, dont les moyens de fournir de l'énergie à un circuit incluent un circuit bi-symétrique pour contrôler l'énergie depuis la source d'énergie.

26. Une pédale selon la revendication 25, dont la source d'énergie est incorporée dans la pédale et les moyens de fournir de l'énergie à un circuit sont configurés pour fournir l'énergie aux LEDs de façon intermittente afin qu'ils clignotent.

27. Une pédale selon la revendication 26, configurée avec une cavité pour loger la source d'énergie sous forme de pile, qui est amovible pour remplacement.

28. Une pédale selon la revendication 27, dont la source d'énergie est une pile rechargeable.

29. Une pédale selon la revendication 28, configurée avec des terminaux électriques au moyen desquels la pile est rechargée.

30. Une pédale selon l'une des revendications précédentes, configurée avec une alarme sonore opérant depuis la même source d'énergie et à la même fréquence que les moyens émetteurs d'éclairage rouge.

31. Une pédale selon l'une des revendications précédentes, dont lesdits moyens émetteurs d'éclairage rouge vers l'arrière du cycle, lesdits moyens émetteurs d'éclairage blanc vers l'avant du cycle et lesdits moyens d'activation sensibles à la force sont un moyen.
